# EUROPÄISCHE PATENTSCHRIFT

(11) **EP 1 451 884 B1**
(45) Veröffentlichungstag und Bekanntmachung des Hinweises auf die Patenterteilung: **12.05.2010**
(21) Anmeldenummer: 02754317.2
(22) Anmeldetag: 04.07.2002
(51) Int. Cl.: H01M 8/02, H01M 8/24

(54) **ELEKTRODENANORDNUNG**
ELECTRODE ARRANGEMENT
AGENCEMENT D'ELECTRODES

(30) Priorität: 05.07.2001 DE 10132078
(43) Veröffentlichungstag der Anmeldung: 01.09.2004
(73) Patentinhaber: 2S-Sophisticated Systems Limited, London SW7 2JN (GB)
(72) Erfinder: Blum, Stephan Rüdiger, 40593 Düsseldorf (DE)
(74) Vertreter: Flügge, Christian
(86) Internationale Anmeldenummer: PCT/DE2002/002446
(87) Internationale Veröffentlichungsnummer: WO 2003/005466

(56) Entgegenhaltungen:
- WO-A-02/09212
- WO-A-99/17390
- DE-C- 19 517 425
- PATENT ABSTRACTS OF JAPAN vol. 1997, no. 12, 25. Dezember 1997 (1997-12-25) & JP 09 223507 A (MATSUSHITA ELECTRIC IND CO LTD), 26. August 1997 (1997-08-26)

## Beschreibung

Die Erfindung betrifft eine Elektrodenanordnung insbesondere für eine Brennstoffzelle.

Aus der WO 00/54358 ist es bekannt, Elektroden für Brennstoffzellen parallel oder in Serie zu schalten. So wird dort bspw. vorgeschlagen, die an einem freien Ende einer koaxial aufgebauten Elektrode angeordnete Anode mit der als Kathode ausgebildeten Oberfläche einer weiteren, gleichartigen Elektrode für eine Serienschaltung elektrisch miteinander zu verbinden.

Weiter wird der Aufbau von Brennstoffzellen-Modulen erläuterte, bei denen jeweils eine Vielzahl von einzelnen Elektroden in einer Ebene in einem Rahmen angeordnet und in Reihe geschaltet sind. Dabei stehen die als Kathode ausgebildeten Oberflächen der einzelnen Elektroden unmittelbar in Berührung und sind an einer Stirnsite des Moduls die Anoden der einzelnen Elektroden miteinander verschaltet.

Einzelne derartige Module können wiederum in Reihe und/oder in Serie geschaltet werden.

Der vergleichsweise komplexe Aufbau der bekannten Module sowie die Notwendigkeit der elektrischen Isolation einzelner Module gegeneinander bei einer Serienschaltung stellen einen erheblichen technischen Aufwand dar. Insbesondere ist auch die Betriebssicherheit einer Brennstoffzelle mit derartigen, insbesondere in Serie geschalteten Modulen fraglich, da bei einer Unterbrechung der einzigen elektrischen Verbindung zwischen den Modulen die Funktion der gesamten Brennstoffzelle nicht mehr gegeben ist.

Die WO02/0921 offenbart eine Verschaltung von Elektrodenbündeln mit jeweils einer Vielzahl unmittelbar benachbarter, insbesondere auch sich berührender Elektroden. Elektrisch sind die Elektroden eines Elektrodenbündels jeweils endseitig durch eigenständige Schaltungsanordnungen verschaltet und durch zwei endseitige, gemeinsame Halterungen werden die gegenläufig angeordneten Elektrodenbündel untereinander mechanisch fixiert.

Die WO99/17390 zeigt eine Brennstoffzelle, bei der ein einzelnes Elektrodenbündel von endseitigen Kopfplatten gehalten ist. Es stellt diese Brennstoffzelle eine in sich geschlossene, vollständige Einheit dar, die, entsprechend herkömmlichen Batterien oder Akkumulatoren, mit weiteren, gleichartigen Einheiten parallel bzw. in Reihe geschaltet werden kann.

Vor diesem technischen Hintergrund macht die Erfindung es sich zur Aufgabe, eine Elektrodenanordnung für eine Brennstoffzelle zur Verfügung zu stellen, die einen einfachen konstruktiven Aufbau aufweist, die jedoch äußerst leistungsfähig ist und deren Geometrie in einfacher Weise gestaltbar ist und die insbesondere einen kreisförmigen Querschnitt aufweisen kann.

Zur Lösung dieser technischen Problematik wird bei einer Elektrodenanordnung für eine Brennstoffzelle, aufweisend mehrere, jeweils aus mehreren parallel geschalteten Elektroden bestehende, in Serie geschaltete, jeweils um 180° gegeneinander gedreht angeordnete Elektrodenbündel gemäß des Anspruchs 1 darauf abgestellt, dass die voneinander beabstandeten Elektroden eines Elektrodenbündels jeweils endseitig in voneinander isolierten, elektrisch leitenden Sektoren einer gemeinsamen Kopfplatte gehalten und elektrisch verschaltet sind.

Eine derartige Elektrodenanordnung setzt zweckmäßigerweise Elektroden voraus, deren Kathode bzw. Anode endseitig abgegriffen werden kann. Infolge ist es möglich, endseitig die Anoden bzw. Kathoden der Elektroden eines Elektrodenbündels miteinander elektrisch zu verschalten, um so eine Reihenschaltung von einer Vielzahl von Elektroden zu erhalten. Infolge wird der Ausfall einer, gegebenenfalls auch mehrerer Elektroden eines Elektrodenbündels dessen Funktionsfähigkeit kaum beeinträchtigen.

Mehrere solcher Elektrodenbündel, bevorzugt gleichartig ausgebildet, werden in Serie weiter geschaltet, wozu wechselnd Elektrodenbündel um 180° gedreht angeordnet sind.

Die Elektroden sind endseitig gefangen, womit eine ausreichende Stabilität insgesamt gegeben ist. Bevorzugt wird hierbei daran gedacht sein, die Enden der ein Elektrodenbündel ausbildenden Elektroden gemeinsam zufassen, wobei durch die Fassung auch die elektrische Verschaltung erfolgen kann. Insbesondere wird weiter diese Fassungen der in Serie geschalteten Elektrodenbündel mechanisch gemeinsam, jedoch elektrisch voneinander getrennt ausgeführt sein.

Diese konstruktive Gestaltung erlaubt Elektrodenanordnungen nahezu beliebiger Geometrie, insbesondere auch von kreisringförmigem Querschnitt.

In konstruktiver Ausgestaltung ist vorgesehen, daß die Elektroden voneinander beabstandet sind. Ein gutes Anströmen jeder einzelnen Elektrode bzw. ein gutes Durchströmen der Elektrodenanordnung beispielsweise mit einem Brenngas ist durch diese Maßnahme gewährleistet.

In konstruktiver Ausgestaltung kann weiter vorgesehen sein, daß Elektrodenbündel jeweils endseitig in voneinander isolierten, elektrisch leitenden Sektoren einer gemeinsamen Kopfplatte gehalten sind. In einfacher Weise werden damit die Elektroden endseitig gefaßt und elektrisch miteinander verschaltet. Bevorzugt sind dabei die Sektoren als Kreissektoren ausgebildet, womit ein kreisringförmiger Querschnitt der Elektrodenanordnung ausgebildet werden kann.

Um Elektrodenbündel in Serie zu verschalten, ist bevorzugt hierzu vorgesehen, daß in einem Sektor zwei gegenpolig angeordnete Elektrodenbündel elektrisch leitend verbunden und insbesondere auch gefangen sind. Hierbei kann es zweckmäßig sein, wenn die Elektrodenbündel gemeinsam in einer Kopfplatte endseitig jeweils gehalten sind, die Sektoren mit Bezug auf eine zentrale Achse gegeneinander verdreht anzuordnen.

Hierbei wird weiter regelmäßig vorgesehen sein, daß eine erste Kopfplatte n Sektoren und eine zweite Kopfplatte n + 1 Sektoren aufweist, wobei n eine ganze Zahl darstellt. Damit wird die zweite Kopfplatte den Plus- und den Minuspol der Elektrodenanordnung aufweisen, insbesondere in nebeneinanderliegenden Sektoren.

Die einzelnen Sektoren können durch isolierende Schichten bspw. voneinander getrennt sein. Es wird jedoch bevorzugt, daß nichtleitende Stege die Sektoren elektrisch voneinander trennen. Hierbei kommt den Stegen neben der die Sektoren verbindenden, jedoch elektrisch voneinander isolierenden, auch durchaus eine tragende Funktion zu. Insbesondere dann, wenn eine gemeinsame Kopfplatte ausgebildet wird. Es bietet sich dann weiter an, die Elektrodenanordnung in einer Brennstoffzelle auch an diesen nichtleitenden Stegen beispielsweise festzulegen.

In einer bevorzugten Ausgestaltung ist vorgesehen, daß die Stege speichenartig einerends in einem Zentrum zu einem Stern gefaßt sind. So sind in einfacher Weise die Sektoren als Kreissektoren ausgebildet. Ist insbesondere in weiterer Ausgestaltung vorgesehen, daß die freien Enden der Stege eines Sterns von einem Ring eingefaßt sind, ist die Herstellung der Elektrodenanordnung nach der Erfindung in besonders einfacher Weise ermöglicht. Es kann nämlich nach Einsetzen der entsprechenden Enden der Elektrodenbündel in die Sektoren ein Verguß dieser Enden in einfacher Weise erfolgen, da die zu vergießenden Bereiche ohne weitere Formen oder dergleichen bereits formmäßig vorgegeben sind.

Es kann vorgesehen sein, daß der Ring hülsenartig axial verlängert ist bis hin zu einem Überdecken der gesamten axialen Erstreckung der Elektrodenanordnung. Es kann so gleichsam ein Gehäuse ausgebildet werden und/oder können Befestigungsmöglichten innerhalb einer Brennstoffzelle zur Verfügung gestellt werden.

In weiterer konstruktiver Ausgestaltung ist vorgesehen, daß die Zentren gegenüberliegender Kopfplatten durch einen Mittelstab verbunden sind, insbesondere daß die Zentren zweier Sterne durch einen solchen Mittelstab miteinander verbunden sind. Somit ist eine exakte Positionierung der einzelnen Elektrodenbündel vorgegeben. Auch erfolgt eine Kraftübertragung bei einer axialen Belastung nicht über die Elektroden selbst, sondern wird diese über den Mittelstab erfolgen. Eine hohe mechanische Stabilität ist damit gewährleistet.

Es kann vorgesehen sein, daß die Elektroden gerade und parallel sich erstreckend angeordnet sind. Ein einfacher konstruktiver Aufbau ist somit gewährleistet. Es kann alternativ jedoch vorgesehen sein, daß die Elektroden gewendelt angeordnet sind. Infolge wird sich, im Vergleich zu gerade angeordneten Elektroden bei gleicher axialer Erstreckung der Elektrodenanordnung, aufgrund der länger ausgeführten, gewendelten Elektroden eine höhere Spannung ergeben. Eine höhere Packungsdichte ist damit erreicht.

Bei einer Variante der Elektrodenanordnung nach der Erfindung ist der Aufbau einer einzelnen Elektrode vereinfacht und wird für ein Elektrodenbündel eine gemeinsame Außenelektrode vorgesehen, an der in einfacher Weise für ein Spannungspotential gegen das umfaßte Elektrodenbündel abgegriffen werden kann.

Dabei hat es sich als zweckmäßig erwiesen, wenn die gemeinsame Außenelektrode in einem Querschnitt einen Kreissektor einfaßt, insbesondere mehrere gemeinsam nebeneinander liegend angeordnete Außenelektroden einen Kreis ausbildend angeordnet sind. Damit kann eine äußerst kompakte Bauform erreicht werden und ist ein Parallelschalten in einfacher Weise durch elektrisches Verbinden der Außenelektroden ermöglicht. Bevorzugt wird jedoch, daß die gegenüberliegenden Flächen nebeneinanderliegender Außenelektroden elektrisch voneinander getrennt angeordnet sind, so daß auch in der eingangs erläuterten Weise eine Reihenschaltung ermöglicht ist. Dann können die Kreissektoren zweier nebeneinander liegender Außenelektroden einem elektrisch leitenden Sektor einer Kopfplatte entsprechen.

Ist eine derartige Elektrodenanordnung mit einer Außenelektrode vorgesehen, können weitere Elektroden radial beabstandet, parallel zu dieser noch vorgesehen werden, die insbesondere unterschiedliche axiale Erstreckungen auch aufweisen können.

Insbesondere für die eingangs beschriebene Elektrodenanordnung nach der Erfindung hat es sich als zweckmäßig erwiesen, eine Trägervorrichtung gemäß Anspruch 20 zur Verfügung zu stellen, bei der vorgesehen ist, daß von einem Mittelteil die Zentren zweier Sterne von speichenartig gefaßten Stegen verbunden sind. Durch eine solche Trägervorrichtung wird die Positionierung von Elektrodenbündeln exakt vorgegeben, die darüber hinaus mechanisch stabil an der Trägervorrichtung angebunden werden. Dabei ist zweckmäßig, wenn die Anzahl der Stege der Sterne um eins differiert. Damit ist in einfacher Weise ein sicherer, elektrischer Anschluß an dem einen Steg mehr aufweisenden Stern ermöglicht.

In einer bevorzugten Ausgestaltung ist der Träger einstückig aus einem elektrisch isolierenden Material gefertigt, beispielsweise aus einem Kunststoff.

Um ein Eingießen der freien Enden der Elektroden bzw. Elektrodenbündel zu ermöglichen, kann weiter vorgesehen sein, die freien Enden der Stege eines Sterns mit einem Ring einzufassen. Dieser Ring wird dann regelmäßig den äußeren Ring einer Kopfplatte markieren. Gegebenenfalls kann ein solcher Ring auch axial hülsenartig verlängert sein.

Die Erfindung wird anhand der Zeichnung näher erläutert, in der schematisch lediglich Ausführungsbeispiele dargestellt sind. In der Zeichnung zeigt:
- Fig. 1:: eine isometrische Darstellung einer Elektrodenanordnung nach der Erfindung,
- Fig. 2:: eine stirnseitige Ansicht gemäß des Pfeils II in Figur 1,
- Fig. 3:: eine Trägervorrichtung nach der Erfindung und
- Fig. 4:: in einem Querschnitt ein weiteres Ausführungsbeispiel einer Elektrodenanordnung.

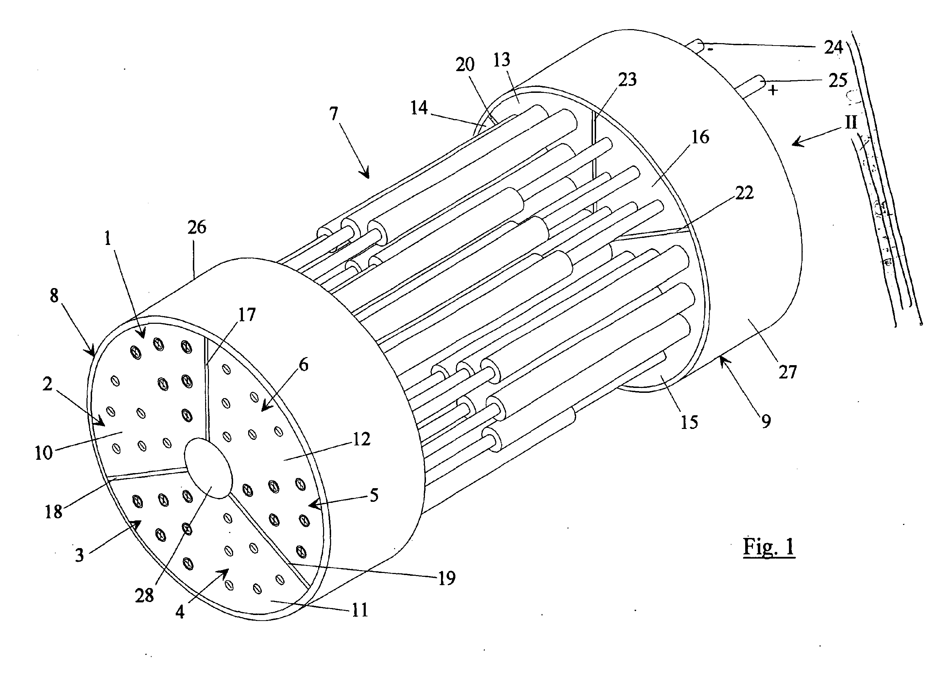

Figur 1 zeigt eine erfindungsgemäße Elektrodenanordnung für eine Brennstoffzelle mit beispielhaft sechs Elektrodenbündeln 1 bis 6, die jeweils wiederum beispielhaft aus sechs einzelnen Elektroden 7 bestehen, die parallel geschaltet sind.

Die Elektrodenbündel 1 bis 6 selbst sind dagegen in Serie geschaltet.

Als Elektroden eignen sich insbesondere tubuläre Verbünde, die einen koaxialen Aufbau aufweisen und deren Plus- bzw. Minuspol endseitig abgegriffen werden kann. Die elektrochemische Reaktion bspw. zwischen einem Brenngas und einem Oxydant erfolgt bei derartigen Elektroden 7 regelmäßig über die koaxiale Struktur derselben, wobei deren Aufbau davon abhängig ist, ob beispielsweise das Brenngas die Elektroden 7 durchströmt oder anströmt.

Um insbesondere das Anströmen jeder Elektrode 7 sicherzustellen, sind die Elektroden 7 untereinander beabstandet.

Die Elektroden 7 bzw. die Elektrodenbündel 1 bis 6 sind endseitig in Kopfplatten 8,9 gefangen und in diesen Kopfplatten 8,9 auch elektrisch verschaltet.

Hierzu sind die Kopfplatten 8,9 in Sektoren aus einem elektrisch leitenden Material, hier in Kreissektoren 10 bis 12 der Kopfplatte 8 bzw. 13 bis 16 der Kopfplatte 9 aufgeteilt, die durch Stege 17 bis 19 bzw. Stege 20 bis 23 aus einem nichtleitenden Material elektrisch voneinander getrennt sind.

Die erste Kopfplatte 8 weist lediglich drei Sektoren 10 bis 12 auf, während die zweite Kopfplatte 9 einen Sektor mehr aufweist, so daß dort der Minuspol 24 und der Pluspol 25 der Elektrodenanordnung beispielsweise abgegriffen werden kann. Allgemein formuliert bedeutet dies, daß die erste Kopfplatte 8 eine Anzahl von n Sektoren und die zweite Kopfplatte 9 eine Anzahl von n+1 Sektoren aufweist, wobei n eine ganze Zahl dargestellt.

Das erste Elektrodenbündel 1 mit gerade und parallel angeordneten Elektroden 7 erstreckt sich zwischen dem Sektor 13 mit dem Minuspol 24 der Kopfplatte 9 und dem Sektor 10 der ersten Kopfplatte 8 und ist dort im Sektor 10 beispielsweise in einer leitenden Vergußmasse gefangen, wodurch auch die Kathoden der Elektroden 7 des Elektrodenbündels 1 leitend miteinander verbunden sind und so deren Parallelschaltung dort sichergestellt ist. Diese Kathoden des ersten Elektrodenbündels 1 sind im Sektor 10 durch das Pluszeichen gekennzeichnet.

In gleicher Art sind in dem elektrisch leitenden Sektor 10 die Anoden das Elektrodenbündel 2 gefangen und elektrisch leitend in einer Parallelschaltung verbunden. Die Anoden sind durch das Minuszeichen dargestellt.

Die Kathoden des Elektrodenbündels 2 sind dann in dem Sektor 14 der Kopfplatte 9 in gleicher Art parallel geschaltet und elektrisch leitend mit den gleichfalls parallel geschalteten Anoden des Elektrodenbündels 3 verbunden, das andernends in der Kopfplatte 8 in dem Sektor 11 parallel geschalteten Kathoden aufweist.

Im Sektor 11 ist wiederum anodenseitig das Elektrodenbündel 4 endseitig gefangen und auch elektrisch zusammengeschaltet. Die kathodenseitige Parallelschaltung des Elektrodenbündels 4 erfolgt im Sektor 15 der Kopfplatte 9, in der die Anoden des Elektrodenbündels 5 weiter parallel geschaltet sind. Die Kathoden des Elektrodenbündels 5 sind im Sektor 12 gefangen und verschaltet, gemeinsam mit den Anoden der Elektroden des Elektrodenbündels 6. Dessen im Sektor 16 der Kopfplatte 9 gefangenen und elektrisch verschalteten Kathoden sind als Pluspol 25 ausgeführt.

Damit sind die sechs Elektrodenbündel 1 bis 6 mit jeweils sechs parallel geschalteten Elektroden selbst in Serie geschaltet, indem in den Sektoren 10 bis 12 und 14 und 15 jeweils zwei gegenpolig angeordnete Elektrodenbündel elektrisch leitend verbunden sind mit der Ausnahme der Sektoren 13 und 16, zwischen denen die abgegebene Spannung der Brennstoffzelle bzw. der Elektrodenanordnung an den Polen 24,25 abgegriffen werden kann.

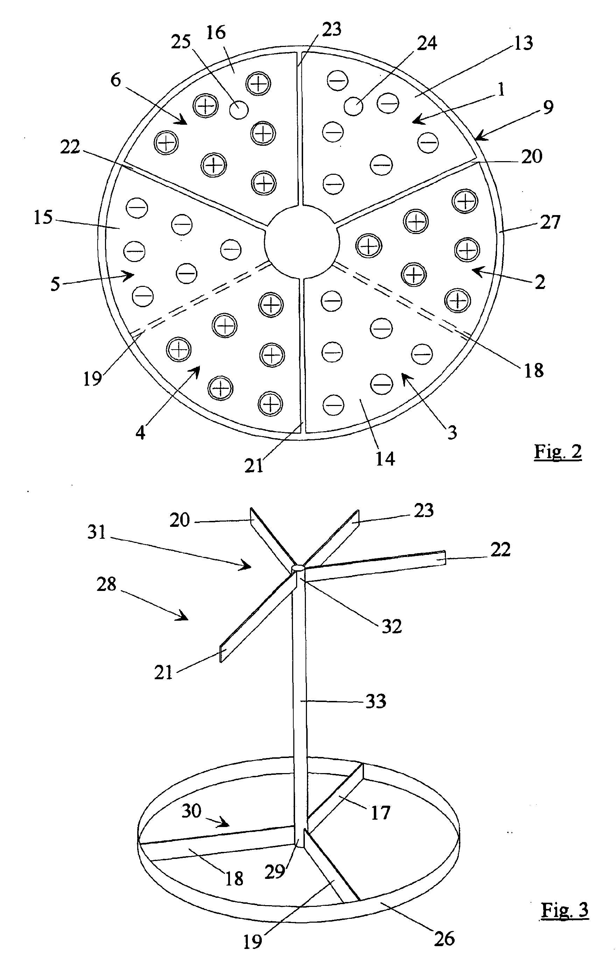

Die die Sektoren 10 bis 12 bzw. 13 bis 16 elektrisch trennenden Stege 17 bis 19 bzw. 20 bis 23 sowie die die Kopfplatten 8 bzw. 9 radial einfassenden Ringe 26,27 können Bestandteil einer Trägervorrichtung 28 sein, vergleiche die nicht maßstabsgerechte Darstellung gemäß Figur 3.

In Figur 3, in der die Vergabe der Bezugszeichen entsprechend der Figur 1 erfolgt ist, ist erkennbar, daß die Stege 17 bis 19 einerends in einem Zentrum 29 zu einem Stern 30 speichenartig gefaßt sind. Die freien, radial außenliegenden Enden der Stege 17 bis 19 sind von einem Ring 26 eingeschlossen. Durch diese Maßnahme ist gleichsam eine Gußform geschaffen, in der die Enden der Elektrodenbündel 1 bis 6 durch beispielsweise ein elektrisch leitfähiges Gießharz gefaßt und elektrisch verschaltet werden können.

Auch die Stege 20 bis 23 der zweiten Kopfplatte 9 können einen Stern 31 mit einem Zentrum 32 ausbilden. In Figur 3 ist der Übersicht halber auf einen Ring um den zweiten Stern 32 verzichtet.

Die Zentren 29 und 32 sind durch einen Mittelstab 33 miteinander verbunden.

Für die Trägervorrichtung 28 wird ein elektrisch isolierendes Material bevorzugt sowie eine einstückige Ausbildung.

Infolge dieser konstruktiven Maßnahme werden axiale Kräfte, die auf die Elektrodenanordnung nach Figur 1 einwirken, von dem Mittelstab 33 aufgefangen. Eine axiale Belastung der Elektroden 7 erfolgt kaum.

In alternativen Ausführungsformen kann weiter vorgesehen sein, daß der Ring 26 hülsenartig axial verlängert ausgebildet ist. Gegebenenfalls kann durch eine solche Verlängerung eine Mantelwand geschaffen werden, die die Elektroden 7 vollständig im Inneren aufnimmt.

Bei gleichen axialen Abmessungen im Vergleich zu einer Elektrodenanordnung mit parallel und gerade angeordneten Elektroden gem. Fig. 1 können bei einer Elektrodenanordnung längere Einzelelektroden bzw. Elektrodenbündel in einer gewendelten Anordnung auch vorgesehen sein, um beispielsweise aufgrund der größeren Länge der einzelnen Elektroden beispielsweise eine höhere Spannung zu erzeugen. Hier ist gegenüber der gezeigten Darstellung lediglich ein Verdrehen der Sterne 30,31 gegeneinander dazu nötig.

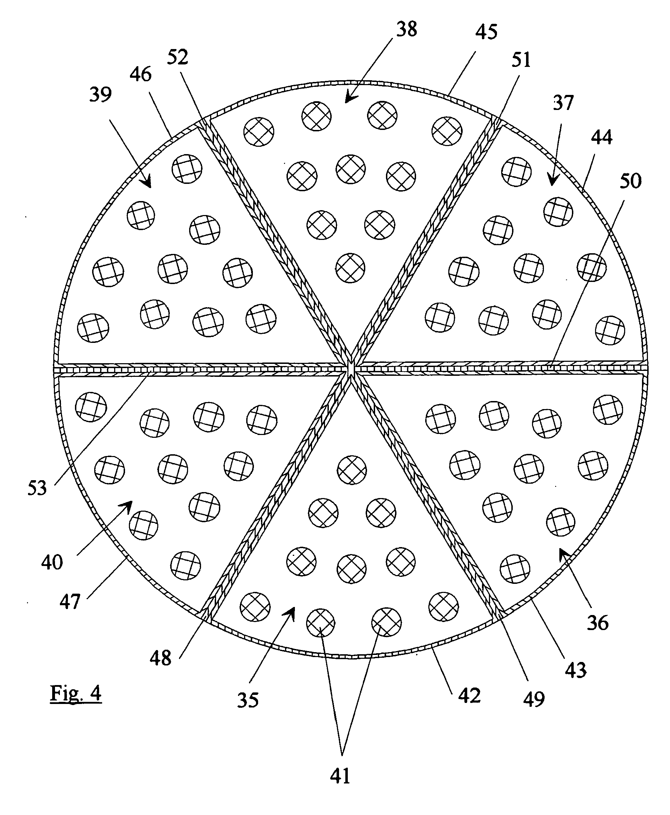

Ein weiteres Ausführungsbeispiel einer Elektrodenanordnung zeigt Fig. 4 schematisch in einem Querschnitt.

Dort sind beispielhaft sechs Elektrodenbündel 35-40 mit jeweils zehn vereinfacht wiedergegebenen, von einer Brennstoffkomponente durch- und/oder angeströmten Einzelelementen 41 dargestellt, welche Elektrodenbündel 35-40 jeweils innerhalb einer gemeinsamen Außenelektrode 42-47 angeordnet sind. Diese gemeinsamen Außenelektroden 42-47 fassen in dem gezeigten Schnitt Kreissektoren ein, deren Öffnungswinkel bei dem Ausführungsbeispiel 60° etwa betragen.

Öffnungswinkel bei dem Ausführungsbeispiel 60° etwa betragen. Durch diese kuchenstückartige Geometrie kann eine Brennstoffzelle in zylinderförmiger Bauweise gem. Fig. 4 erstellt werden, wobei dann für ein Verschalten der Elektrodenbündel 35-40 untereinander in Serie die gegenüberliegenden Flächen der Außenelektroden 42-47 elektrisch gegeneinander isoliert sein müssen. Hierzu kann eine Trägervorrichtung aus einem elektrisch isolierenden Kunststoff gemäß Fig. 3 herangezogen werden, bei der die Stege axial verlängert, insbesondere bis zur gegenüberliegenden Kopfplatte reichend, ausgebildet sind. Solche Stege 48-53 trennen dann die Außenelektroden 42-47 und sorgen darüber hinaus auch für den mechanischen Halt, da die Außenelektroden 42-47 gleichsam in Taschen aufgenommen sind.

Entsprechend den voranstehend beschriebenen Ausführungsbeispielen werden umlaufen nebeneinander liegende Elektrodenbündel wechselnd in leitenden Sektorenhälften der Kopfplatten eingebunden und auch im Wechsel, bevorzugt die Außenelektroden gleichfalls eingebunden oder anderweitig elektrisch verschaltet. So bildet eine Außenelektrode 42-47 einen leitenden Sektor der Kopfplatte hälftig mit aus.

## Patentansprüche

1. Elektrodenanordnung für eine Brennstoffzelle, aufweisend mehrere, jeweils aus mehreren parallel geschalteten Elektroden (7) bestehende, in Serie geschaltete, jeweils um 180° gegeneinander gedreht angeordnete Elektrodenbündel (1-6), **dadurch gekennzeichnet, dass** die voneinander beabstandeten Elektroden (7) eines Elektrodenbündels jeweils endseitig in voneinander isolierten, elektrisch leitenden Sektoren (10-12) einer gemeinsamen Kopfplatte (8) gehalten und elektrisch verschaltet sind.

2. Elektrodenanordnung nach einem oder mehreren der vorangehenden Ansprüche, **dadurch gekennzeichnet, dass** die Sektoren (10-12) Kreissektoren sind.

3. Elektrodenanordnung nach einem oder mehreren der vorangehenden Ansprüche, **dadurch gekennzeichnet, dass** in einem Sektor (10) zwei gegenpolig angeordnete Elektrodenbündel (1,2) elektrisch leitend verbunden sind.

4. Elektrodenanordnung nach einem oder mehreren der vorangehenden Ansprüche, **dadurch gekennzeichnet, dass** eine erste Kopfplatte (8) n Sektoren und eine zweite Kopfplatte (9) n + 1 Sektoren aufweist, wobei n eine ganze Zahl darstellt.

5. Elektrodenanordnung nach einem oder mehreren der vorangehenden Ansprüche, **dadurch gekennzeichnet, dass** die Sektoren (10-12) durch nichtleitende Stege (17-19) voneinander getrennt sind.

6. Elektrodenanordnung nach Anspruch 5, **dadurch gekennzeichnet, dass** die Stege (17-19) speichenartig einerends in einem Zentrum (29) zu einem Stern (30) gefaßt sind.

7. Elektrodenanordnung nach Anspruch 6, **dadurch gekennzeichnet, dass** die freien Enden der Stege (17-19) eines Sterns (30) von einem Ring (26) eingefaßt sind.

8. Elektrodenanordnung nach Anspruche 7, **dadurch gekennzeichnet, dass** der Ring hülsenartig axial verlängert ist.

9. Elektrodenanordnung nach einem oder mehreren der vorangehenden Ansprüche 6 bis 8, **dadurch gekennzeichnet, dass** die Zentren (29,32) gegenüberliegenden Kopfplatten (8,9) durch einen Mittelstab (33) verbunden sind.

10. Elektrodenanordnung nach einem oder mehreren der vorangehenden Ansprüche, **dadurch gekennzeichnet, dass** die Elektroden gewendelt angeordnet sind.

11. Elektrodenanordnung nach einem oder mehreren der vorangehenden Ansprüche, **dadurch gekennzeichnet, dass** ein Elektrodenbündel eine gemeinsame Außenelektrode aufweist.

12. Elektrodenanordnung nach Anspruch 11, **dadurch gekennzeichnet, dass** die gemeinsame Außenelektrode in einem Querschnitt einen Kreissektor einfaßt.

13. Elektrodenanordnung nach Anspruch 11, **dadurch gekennzeichnet, dass** mehrere gemeinsame Außenelektroden nebeneinander liegend einen Kreis ausbildend angeordnet sind.

14. Elektrodenanordnung nach einem oder mehreren der vorangehenden Ansprüche 11 bis 13, **dadurch gekennzeichnet, dass** gegenüberliegende Flächen nebeneinander liegende Außenelektroden elektrisch gegeneinander isoliert sind.

15. Elektrodenanordnung nach einem oder mehreren der vorangehenden Ansprüche 11 bis 13, **dadurch gekennzeichnet, dass** Kreissektore zweier gemeinsamen Außenelektroden einem elektrisch leitenden Sektoren entsprechen.

16. Elektrodenanordnung nach einem oder mehreren der vorangehenden Ansprüche 11 bis 15, **dadurch gekennzeichnet, dass** ein Elektrodenbündel mehrere von der Außenelektrode radial beabstandete, parallel zu dieser angeordnete Elektroden aufweist.

17. Trägervorrichtung für eine Elektrodenanordnung nach einem oder mehreren der vorangehenden Ansprüche, **dadurch gekennzeichnet, dass** die Zentren (29,32) zweier Sterne (30,31) von speichenartig gefaßten Stegen (17-19;20-23) durch einem Mittelstab (33) verbunden verbunden sind.

18. Trägervorrichtung nach Anspruch 17, **dadurch gekennzeichnet, dass** die Anzahl der Stege (17-19;20-23) der Sterne (30,31) um eins differiert.

19. Trägervorrichtung nach einem oder mehreren der vorangehenden Ansprüche 17 und 18, **dadurch gekennzeichnet, dass** die Trägervorrichtung einstückig aus einem elektrisch nichtleitenden Material besteht.

20. Trägervorrichtung nach einem oder mehreren der vorangehenden Ansprüche 17 bis 19, **dadurch gekennzeichnet, dass** die freien Enden der einen Stern bildenden Stege (17-19) von einem Ring (26) eingefaßt sind.

## Claims

1. An electrode arrangement for a fuel cell, comprising a plurality of electrode bundles (1-6) which each comprise a plurality of electrodes (7) connected in parallel, which are connected in series and which are each disposed rotated through 180° with respect to one another, **characterised in that** the electrodes (7) of an electrode bundle spaced apart from one another are each held and electrically connected at the end in electrically conductive sectors (10-12) of a common top plate (8), said sectors being insulated from one another.

2. The electrode arrangement according to one or more of the preceding claims, **characterised in that** the sectors (10-12) are circular sectors.

3. The electrode arrangement according to one or more of the preceding claims, **characterised in that** two electrode bundles (1, 2) disposed with opposite poles are connected in an electrically conductive manner in a sector (10).

4. The electrode arrangement according to one or more of the preceding claims, **characterised in that** a first top plate (8) comprises n sectors and a second top plate (9) comprises n + 1 sectors, n being a whole number.

5. The electrode arrangement according to one or more of the preceding claims, **characterised in that** the sectors (10-12) are separated from one another by non-conductive webs (17-19).

6. The electrode arrangement according to claim 5, **characterised in that** the webs (17-19) are held at one end in a centre (29) to form a star (30).

7. The electrode arrangement according to claim 6, **characterised in that** the free ends of the webs (17-19) of a star (30) are enclosed by a ring (26).

8. The electrode arrangement according to claim 7, **characterised in that** the ring is elongated axially in the manner of a sleeve.

9. The electrode arrangement according to one or more of claims 6 to 8, **characterised in that** the centres (29, 32) of opposite-lying top plates (8, 9) are connected by a central rod (33).

10. The electrode arrangement according to one or more of the preceding claims, **characterised in that** the electrodes are disposed in a spiralled manner.

11. The electrode arrangement according to one or more of the preceding claims, **characterised in that** an electrode bundle comprises a common outer electrode.

12. The electrode arrangement according to claim 11, **characterised in that** the common outer electrode encloses a circular sector in a cross-section.

13. The electrode arrangement according to claim 11, **characterised in that** a plurality of common outer electrodes are disposed lying beside one another forming a circle.

14. The electrode arrangement according to one or more of preceding claims 11 to 13, **characterised in that** opposite-lying faces of outer electrodes lying beside one another are insulated electrically with respect to one another.

15. The electrode arrangement according to one or more of preceding claims 11 to 13, **characterised in that** circular sectors of two common outer electrodes correspond to an electrically conductive sector.

16. The electrode arrangement according to one or more of preceding claims 11 to 15, **characterised in that** an electrode bundle comprises a plurality of electrodes spaced radially apart from the outer electrode and disposed parallel to the latter.

17. A carrier device for an electrode arrangement according to one or more of the preceding claims, **characterised in that** the centres (29, 32) of two stars (30, 31) of webs (17-19; 20-23) enclosed spoke-like are connected by means of a central rod (33).

18. The carrier device according to claim 17, **characterised in that** the number of webs (17-19; 28-23) of the stars (30, 31) differs by one.

19. The carrier device according to one or more of preceding claims 17 and 18, **characterised in that** the carrier device is made in one piece from an electrically non-conductive material.

20. The carrier device according to one or more of preceding claims 17 to 19, **characterised in that** the free ends of the webs (17-19) forming a star are enclosed by a ring (26).

## Revendications

1. Agencement d'électrodes pour une pile de combustible, présentant plusieurs faisceaux d'électrodes (1-6) comprenant chacun plusieurs électrodes (7) branchées en parallèle, branchés en série et disposés tournés à chaque fois de 180° les uns par rapport aux autres, **caractérisé en ce que** les électrodes (7) espacées les unes des autres d'un faisceau d'électrodes sont maintenues et branchées électriquement à chaque fois côté extrémité dans des secteurs (10-12) isolés les uns des autres, électroconducteurs, d'une plaque supérieure (8) commune.

2. Agencement d'électrodes selon l'une quelconque ou plusieurs des revendications précédentes, **caractérisé en ce que** les secteurs (10-12) sont des secteurs circulaires.

3. Agencement d'électrodes selon l'une quelconque ou plusieurs des revendications précédentes, **caractérisé en ce que** deux faisceaux d'électrodes (1, 2) disposés en opposition de pôle sont reliés de façon électroconductrice dans un secteur (10).

4. Agencement d'électrodes selon l'une quelconque ou plusieurs des revendications précédentes, **caractérisé en ce qu'**une première plaque supérieure (8) présente n secteurs et une seconde plaque supérieure (9) n+1 secteurs, n étant représentant un nombre entier.

5. Agencement d'électrodes selon l'une quelconque ou plusieurs des revendications précédentes, **caractérisé en ce que** les secteurs (10-12) sont séparés les uns des autres par des barrettes (17-19) électroconductrices.

6. Agencement d'électrodes selon la revendication 5, **caractérisé en ce que** les barrettes (17-19) sont groupées à la façon de rayons sur une extrémité en un centre (29) de façon à former une étoile (30).

7. Agencement d'électrodes selon la revendication 6, **caractérisé en ce que** les extrémités libres des barrettes (17-19) d'une étoile (30) sont entourées par une bague (26).

8. Agencement d'électrodes selon la revendication 7, **caractérisé en ce que** la bague est prolongée axialement en forme de douille.

9. Agencement d'électrodes selon l'une quelconque ou plusieurs des revendications 6 à 8 précédentes, **caractérisé en ce que** les plaques supérieures (8, 9) faisant face à des centres (29, 32) sont reliées par une barre centrale (33).

10. Agencement d'électrodes selon l'une quelconque ou plusieurs des revendications précédentes, **caractérisé en ce que** les électrodes sont disposées de façon spiralée.

11. Agencement d'électrodes selon l'une quelconque ou plusieurs des revendications précédentes, **caractérisé en ce qu'**un faisceau d'électrodes présente une électrode extérieure commune.

12. Agencement d'électrodes selon la revendication 11, **caractérisé en ce que** l'électrode extérieure commune entoure un secteur circulaire dans une section transversale.

13. Agencement d'électrodes selon la revendication 11, **caractérisé en ce que** plusieurs électrodes extérieures communes sont disposées les unes à côté des autres formant un cercle.

14. Agencement d'électrodes selon l'une quelconque ou plusieurs des revendications 11 à 13 précédentes, **caractérisé en ce que** des surfaces opposées d'électrodes extérieures disposées les unes à côté des autres sont isolées électriquement les unes par rapport aux autres.

15. Agencement d'électrodes selon l'une quelconque ou plusieurs des revendications 11 à 13 précédentes, **caractérisé en ce que** des secteurs circulaires de deux électrodes communes correspondent à un secteur électroconducteur.

16. Agencement d'électrodes selon l'une quelconque ou plusieurs des revendications 11 à 15 précédentes, **caractérisé en ce qu'**un faisceau d'électrodes présente plusieurs électrodes espacées radialement de l'électrode extérieure et disposées parallèlement par rapport à celle-ci.

17. Dispositif support pour un agencement d'électrodes selon l'une quelconque ou plusieurs des revendications précédentes, **caractérisé en ce que** les centres (29, 32) de deux étoiles (30, 31) de barrettes (17-19 ; 20-23) regroupées en forme de rayons sont reliés par une barre centrale (33)

18. Dispositif support selon la revendication 17, **caractérisé en ce que** le nombre des barrettes (17-19 ; 20-23) des étoiles (30, 31) est différent de un.

19. Dispositif support selon l'une quelconque ou plusieurs des revendications 17 et 18 précédentes, **caractérisé en ce que** le dispositif support est à base d'un seul tenant d'un matériau non électroconducteur.

20. Dispositif support selon l'une quelconque ou plusieurs des revendications 17 à 19 précédentes, **caractérisé en ce que** les extrémités libres des barrettes (17-19) formant une étoile sont entourées par une bague (26).
